# EUROPÄISCHE PATENTSCHRIFT

(11) **EP 1 703 345 B1**
(45) Veröffentlichungstag und Bekanntmachung des Hinweises auf die Patenterteilung: **05.05.2010**
(21) Anmeldenummer: 06002027.8
(22) Anmeldetag: 01.02.2006
(51) Int. Cl.: G05B 19/042

(54) **Dezentrale Fehlerreaktion bei Kurvenscheibenachsen**
Decentral reaction to cam-axis errors
Réaction décentralisée à une erreur sur un axe d'une came

(30) Priorität: 16.03.2005 DE 102005012024
(43) Veröffentlichungstag der Anmeldung: 20.09.2006
(73) Patentinhaber: Bosch Rexroth AG, 70184 Stuttgart (DE)
(72) Erfinder: Rüpel, Wolfgang, 97833 Frammersbach (DE); Schultze, Stephan, 97816 Lohr am Main (DE)

(56) Entgegenhaltungen:
- EP-A- 1 600 834
- DE-A1- 19 934 044

## Beschreibung

Die vorliegende Erfindung betrifft ein Verfahren und ein Computersystem zur Fehlerreaktion bei Auftreten eines Fehlers bei einer Bewegung in einer Maschine. Ferner betrifft die vorliegende Erfindung ein entsprechendes Computerprogramm.

Die vorliegende Erfindung betrifft ein Verfahren zur Fehlerreaktion bei Auftreten eines Fehlers bei einer Bewegung, insbesondere eines Antriebs, in einer Maschine, wobei die Bewegung unter Einsatz mindestens einer Leitachse und mindestens einer mindestens einen Ein- und einen Ausgang aufweisenden und von der Leitachse gesteuerten Kurvenscheibe erfolgt. Generell wird eine Kurvenscheibe über eine Leitachse angesteuert. Zu jedem Punkt in der Leitachslage existiert ein in einem Kurvenspeicher der Kurvenscheibe hinterlegtes Äquivalent. Der Kurvenspeicher enthält diese Äquivalente, die sog. Lagesollwerte der Kurvenscheibe, zum Beispiel in Tabellenform. Für eine Bewegung der Leitachse ist dadurch ein bestimmtes Bewegungsprofil für die Kurvenscheibe vorgegeben. Die Kurvenscheibe kann dabei über eine real vorhandene Leitachse gesteuert werden. Mit jeder Position in der Leitachslage ist eine Position in der Kurvenscheibe verknüpft. Die Kurvenscheibe folgt der Leitachse mit dem im Kurvenspeicher hinterlegten Bewegungsprofil.

Die sich daraus ergebende Kopplung entspricht der einer mechanischen Kopplung zweier Module mit einer Welle. Zur Erfassung der Leitachslage ist eine Erfassungseinheit vorgesehen, die wiederum an einen Eingang der Kurvenscheibe gekoppelt ist. Ferner ist es auch denkbar, dass die Kurvenscheibe von einer virtuellen Leitachse gesteuert wird. Dabei ist ebenfalls jede Position in der Leitachslage mit einer Position der Kurvenscheibe verknüpft. Auch hier folgt die Kurvenscheibe der Leitachse mit dem im Kurvenspeicher hinterlegten Bewegungsprofil.

Es ist bekannt, dass eine Funktionalität innerhalb der Kurvenscheibe eine Bewegung eines sogenannten Leitwertes der Leitachse mittels einer in der Kurvenscheibe hinterlegten Tabelle in ein sog. Lagesollwertprofil umsetzt. Bei dem Leitwert der Leitachse kann es sich dabei bspw. um eine Leitachsposition oder eine Leitachsgeschwindigkeit handeln. Üblicherweise ist die Bewegung eines Leitwertes eine konstante Bewegung, wie bspw. eine Maschinengeschwindigkeit bzw. ein Maschinenleitwinkel. Das in der Tabelle der Kurvenscheibe enthaltene Lagesollwertprofil wird im allgemeinen durch ein beliebiges Bewegungsgesetz, wie bspw. durch Polynomstücke, vorgegeben.

In der DE 199 34 044 A1 wird ein Verfahren zum elektronischen Ein- und Auskuppeln einer elektronisch zu einem Master-Wellen-Sollwert zu synchronisierenden Gruppe von Servo-Achsen vorgeschlagen, wobei für das Einkuppeln, für den synchronen Betrieb, für das Auskupplen und für den ausgekuppelten Zustand entsprechende Sollwertetabellen als elektronische Kurvenscheiben festgelegt sind.

Im Falle eines auftretenden Fehlers bei einer Bewegung, insbesondere bei einem Antrieb in einer Maschine werden derzeit anhand von Prozessgrößen, die reglungstechnisch der Kurvenscheibe, d.h. der Kurvenscheibentabelle, nachfolgen verschiedenartige sog. Fehlerreaktionen durchgeführt. Bei den Fehlerreaktionen handelt es sich bspw. um eine sog. Momentenfreischaltung, eine Geschwindigkeitssollwert-Nullschaltung oder eine Positionierbewegung. Bei der Geschwindigkeitssollwert-Nullschaltung können evtl. Randbedingungen wie bspw. eine Beschleunigung oder ein Druck, vorgegeben werden. Bei der Positionierbewegung können ebenfalls Randbedingungen wie Geschwindigkeit, Beschleunigung oder Druck vorgegeben werden.

Bei dezentral aufgebauten Systemen mit dezentralen Teilnehmern mit zyklischer Übertragung eines Leitwertes über ein Kommunikationssystem fehlt bei Zusammenbruch einer Kommunikation ab dem Zeitpunkt des Fehlereintritts die Information des Leitwertes in den dezentralen Teilnehmern.

Bei dezentral durchgeführten Fehlerreaktionen, die bspw. dann auftreten, wenn eine zentrale Steuerung eine Leitwertinformation einer Leitachse über ein Kommunikationssystem an dezentrale Verarbeitungen, wie bspw. Antriebe, überträgt und das Kommunikationssystem zusammenbricht, würden nach derzeitigem Stand der Technik alle Achsen bspw. mit einer vorgebbaren Verzögerung konstant bis zum Stillstand abgebremst werden. Eine derartige Abbremsbewegung berücksichtigt jedoch nicht die normale, allgemein nicht-konstante Bewegung, die sich durch die Kurvenscheibenfünktionalität ergeben würde. Ferner werden leitwertbezogene Ausgangssignale nicht mehr ermittelt und ausgeben, da der Leitwert für diese Ausgangssignale nicht mehr verändert wird. Das bedeutet, dass derzeitig eingesetzte Fehlerreaktionen nicht die realen in einer Achse bzw. Achsgruppe auftretenden Bewegungsprofile berücksichtigen. Wird bspw. als Fehlerreaktion eine Drehzahlsollwert-Nullschaltung eingesetzt, so wird dabei nur eine konstante Verzögerung mit einer angenommenen linearen Bewegungsgleichung angesetzt, was nicht zwingend bzw. in der Regel nicht den realen Bewegungsprofilen entspricht. Eine Folge davon können bspw. Kollisionen oder Maschinenstörungen sein.

Ferner kann es durch fehlende Ermittlung von leitwertbezogenen Ausgangssignalen ebenfalls zu Schäden kommen. Derart leitwertbezogene Ausgangssignale können bspw. Zusatzaggregate steuernde Nocken bzw. sog. Geberemulationssignale sein.

### Aufgabe der Erfindung

Es war nunmehr eine Aufgabe der vorliegenden Erfindung ein Verfahren bereitzustellen, mit dessen Hilfe es möglich ist bei Auftreten eines Fehlers bei einer Bewegung in einer Maschine eine verbesserte Fehlerreaktion, insbesondere im Hinblick auf oben genannte Nachteile, bereitzustellen.

### Zusammenfassung der Erfindung

Ausgehend davon schlägt die vorliegende Erfindung ein Verfahren zur Fehlerreaktion bei Auftreten eines Fehlers bei einer Bewegung in einer Maschine mit den Merkmalen des Patentanspruchs 1, ein Computersystem mit den Merkmalen des Patentanspruchs 10, ein Computerprogramm mit den Merkmalen des Patentanspruchs 13 und ein Computerprogrammprodukt mit den Merkmalen des Patentanspruchs 15 vor.

Gemäß Patentanspruch 1 wird ein Verfahren zur Fehlerreaktion bei Auftreten eines Fehlers bzw. einer Störung bei einer Bewegung, insbesondere einem Antrieb, in einer Maschine mit einer Übertragung einer Leitachsinformation bereitgestellt, wobei die Bewegung unter Einsatz mindestens einer Leitachse und mindestens einer mindestens einen Ein- und einen Ausgang aufweisenden und von der Leitachse gesteuerten Kurvenscheibe erfolgt. Bei Auftreten einer Störung bei der Übertragung der Leitachsinformation werden dabei an dem mindestens einen Eingang der mindestens einen Kurvenscheibe vorliegende Prozessgrößen zur Einleitung und Durchführung der Fehlerreaktion verwendet.

In einer möglichen Ausführungsform des erfindungsgemäßen Verfahrens werden die Prozessgrößen durch einen von der Leitachse vorgegebenen Leitwert bestimmt. Dabei handelt es sich bspw. um Leitwertposition, Leitwertgeschwindigkeit, Leitwertbeschleunigung und/oder Leitwertruck.

In einer weiteren möglichen Ausführungsform des erfindungsgemäßen Verfahrens wird als Fehlerreaktion eine Geschwindigkeitssollwert-Nullschaltung durchgeführt. Ferner ist es denkbar als Fehlerreaktion eine sog. Positionierbewegung durchzuführen. In beiden Fällen können dabei Randbedingungen vorgegeben werden, wie bspw. Beschleunigung oder Ruck.

In einer anderen Ausführungsform des erfindungsgemäßen Verfahrens wird als Leitachse eine zentrale Leitachse gewählt, die mit der mindestens einen Kurvenscheibe als Element eines dezentral arbeitenden Systems über ein Führungskommunikationssystem gekoppelt ist, und die Fehlerreaktion wird dezentral durchgeführt. Bei einer derartigen Bewegung, die zentral von einer Steuerung, d.h. von einer zentralen Leitachse gesteuert an dezentral arbeitende Systeme über ein Führungskommunikationssystem übertragen wird, wird demnach die Fehlerreaktion, die möglicherweise aufgrund eines Ausfalls des Führungskommunikationssystems eingeleitet und durchgeführt wird, verbessert. In der zentralen Steuerung bzw. der zentralen Leitachse wird der Leitwert nach wie vor generiert und im Normalfall über ein Führungskommunikationssystem, wie bspw. ein sog. SERCOS interface, an intelligente Antriebe übertragen. Dabei sind die Kürvenscheibenfunktionalitäten dezentral in den Antrieben enthalten bzw. den Antrieben vorgeschaltet. Bei Ausfall des Führungskommunikationssystems wird gemäß dem erfindungsgemäßen Verfahren die Fehlerreaktion dezentral eingeleitet.

Aufgrund der Einleitung und Durchführung der Fehlerreaktion anhand des Leitwertes ist es gemäß dem erfindungsgemäßen Verfahren möglich, dezentral verteilte synchrone Fehlerreaktionen durchzuführen, die dazu führen, dass bspw. eine Maschine im Falle eines Fehlers genauso reagiert als ob die Leitwertbewegung zentral vorgegeben wird. Durch Anwendung des erfindungsgemäßen Verfahrens werden nach extern abgegebene Signale weiterhin und zum richtigen Zeitpunkt ausgeben. Bei den nach extern abgegebenen Signalen kann es sich dabei um leitwertbezogene Nocken, lagesollwertbezogene Nocken, leitwertbezogene analoge Geschwindigkeiten und/oder leitwertbezogene sog. Geberemulationssignale handeln.

Bei Anwendung des erfindungsgemäßen Verfahren verbleiben bspw. Antriebsachsen in ihrer vor Auftreten des Fehlers vorhandenen Betriebsart wie bspw. Geschwindigkeits- oder Lageregelung. Derzeit werden Betriebsarten von Antriebsachsen im allgemeinen gewechselt. So führt bspw. eine Drehzahlsollwert-Nullschaltung einer lagegeregelten Achse gemäß dem derzeitigen Stand der Technik zu einem Betriebsartenwechsel auf Geschwindigkeitsregelung mit möglicherweise ungünstigeren Prozesstechniken bzw. regelungstechnischen Eigenschaften.

Gemäß dem erfindungsgemäßen Verfahren wird eine Fehlerreaktion nicht anhand der Prozessgrößen durchgeführt, die regelungstechnisch der Kurvenscheibenfunktionalität nachfolgen, sondern anhand der Prozessgrößen, die regelungstechnisch vorausgehen. Dies bedeutet, dass anhand der Prozessgrößen des Leitwertes wie bspw. Leitwertposition, Leitwertgeschwindigkeit, Leitwertbeschleunigung und/oder Leitwertdruck eine Fehlerreaktion mit Hilfe einer lokal gebildeten Leitachsfunktion eingeleitet wird. Hierbei sind erfindungsgemäß fast alle Fehlerreaktionen denkbar, die derzeit auch bei einer Einzelachse möglich sind. Neben der bereits genannten Geschwindigkeitssollwert-Nullschaltung und der Positionierbewegung sind auch andere Möglichkeiten denkbar. Dabei ist es bspw. möglich, eine Fehlerreaktion unter Vorgabe einer Verzögerungszeitspanne bzw. eines Leitwertweges einzuleiten. Hierdurch wird es bspw. möglich, eine mehrstufige Maschine synchronisiert leerzufahren, indem analog einem Schieberegister Produkte in den Maschinenstufen nach und nach nicht mehr bearbeitet werden. Im Falle einer Positionierbewegung kann dies bspw. auch über eine Zielposition, die mehrere Leitwertzyklen, wie bspw. Umdrehungen oder Maschinentakte, beinhaltet, erreicht werden.

Wenn ein temporärer Fehler der zu einer dezentralen verzögerten Abschaltung führen soll, innerhalb der Verzögerungszeitspanne wieder wegfällt, kann die schon eingeleitete und angelaufene dezentrale Fehlerreaktion wieder rückgesetzt werden, bspw. durch eine zentrale Steuerung.

In einer weiteren beispielhaften Ausführungsform des erfindungsgemäßen Verfahrens wird bei Auftreten des Fehlers mittels der aktuellen Prozessgrößen auf eine virtuelle, insbesondere eine lokale virtuelle, die mindestens eine Kurvenscheibe steuernde Leitachse umgeschaltet.

Ferner betrifft die vorliegende Erfindung ein Computersystem zur Fehlerreaktion bei Auftreten eines Fehlers bei einer Bewegung in einer Maschine, wobei die Bewegung und der Einsatz mindestens einer Leitachse und mindestens einer mindestens einen Ein- und einen Ausgang aufweisenden und von der Leitachse gesteuerten Kurvenscheibe erfolgt. Das erfindungsgemäße Computersystem weist dabei mindestens eine Kontrolleinheit zum Erkennen des Auftreten des Fehlers, mindestens eine Ausleseeinheit zum Auslesen der an dem mindestens einen Eingang der mindestens einen Kurvenscheibe vorliegenden aktuellen Prozessgrößen und mindestens eine Verarbeitungseinheit zum Einleiten und Durchführen der Fehlerreaktion mittels der ausgelesenen Prozessgrößen auf.

Ferner kann das erfindungsgemäße Computersystem in der Verarbeitungseinheit eine Umschalteinheit vorsehen, die bei Auftreten des Fehlers mittels der aktuellen Prozessgrößen die Steuerung der mindestens einen Kurvenscheibe automatisch auf eine in Bezug auf das dezentrale System lokale virtuelle Leitachse umschalten kann.

Weiterhin ist es denkbar, dass bei dem erfindurigsgemäßen Computersystem eine Speichereinheit vorgesehen ist, in welcher eine oder mehrere abrufbare Fehlerreaktionen hinterlegt sind.

Darüber hinaus betrifft die vorliegende Erfindung ein Erzeugnis zur Durchführung des erfindungsgemäßen Verfahrens, wobei das Erzeugnis ein Computerprogramm mit Programmcode ist, der bei Ablauf des Computerprogramms auf einem Computer dazu geeignet ist, ein erfindungsgemäßes Verfahren durchzuführen. Ferner kann das Computerprogramm auf einem computerlesbaren Medium gespeichert sein.

Die hier vorliegende Erfindung umfasst ferner einen computerlesbaren Datenträger mit einem darauf gespeicherten Computerprogramm, das einen Programmcode umfasst, der bei Ablauf des Computerprogramms auf einem Computer dazu geeignet ist, ein erfindungsgemäßes Verfahren durchzuführen.

Die vorliegende Erfindung betrifft auch ein Computersystem mit einem Speichermittel, in dem ein Computerprogramm mit Programmcode gespeichert ist, der bei Ablauf des Computerprogramms auf einem Computer dazu geeignet ist, ein erfindungsgemäßes Verfahren durchzuführen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

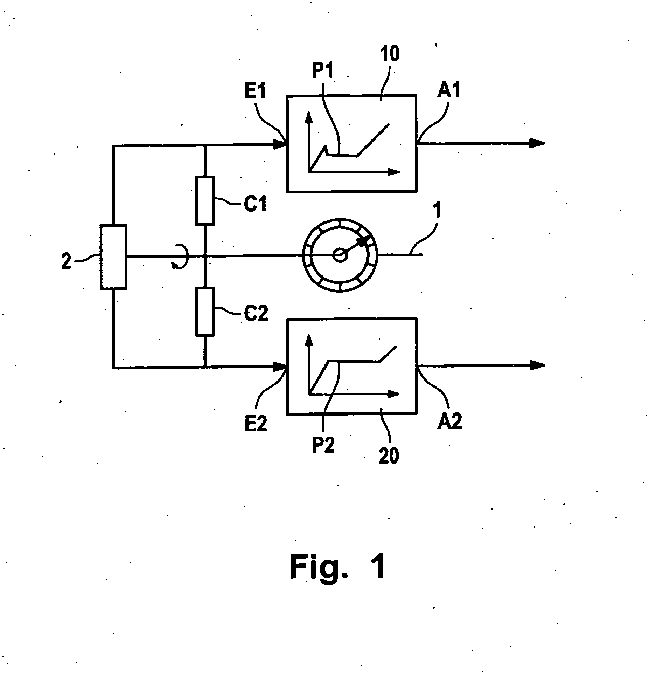

- Figur 1: zeigt in schematischer Ausführung eine mögliche Ausführungsform eines erfindungsgemäßen Verfahrens.

Dargestellt ist eine Leitachse 1, die sich dreht und dabei einen sog. Leitwert generiert. Der Leitwert kann eine Leitachsposition bzw. ein Leitachswinkel oder eine Leitachsgeschwindigkeit sein. Über ein Kommunikationssystem 2 wird die Leitwertinformation an dezentrale Verarbeitungen, wie bspw. Antriebe übertragen. Den dezentralen Verarbeitungen bzw. Antrieben sind jeweils Kurvenscheiben 10 bzw. 20 vorgeschaltet. Die Kurvenscheiben 10 bzw. 20 setzen jeweils eine Bewegung des ihnen mitgeteilten Leitwertes mittels einer Tabelle bzw. eines in ihnen jeweils hinterlegten Bewegungsprofils P1 bzw. P2 in ein entsprechendes Lagesollwertprofil um. Üblicherweise ist die Bewegung des Leitwertes eine konstante Bewegung, das in der Tabelle enthaltene Lagesollwertprofil P1 bzw. P2 wird im allgemeinen durch ein beliebiges Bewegungsgesetz vorgegeben. Im Falle des Auftretens eines Fehlers, wie bspw. des Zusämmenbruchs des Kommunikationssystems 2, wird eine Fehlerreaktion anhand von Prozessgrößen durchgeführt, die regelungstechnisch der Funktionalität der Kurvenscheiben 10 bzw. 20 vorausgehen. Das bedeutet, dass die Fehlerreaktion unmittelbar anhand des Leitwertes eingeleitet wird. Der Leitwert kann dabei, wie voranstehend bereits erwähnt, eine Leitwertposition, eine Leitwertgeschwindigkeit, eine Leitwertbeschleunigung oder ein Leitwertruck sein. Der Leitwert bzw. die Leitwertinformation wird dabei vor oder an den jeweiligen Eingängen E1 bzw. E2 der Kurvenscheiben 10 bzw. 20 ausgelesen und zur Einleitung und Durchführung der Fehlerreaktion verwendet.

Als Fehlerreaktion sind fast alle Fehlerreaktionen denkbar, die derzeit auch bei einer Einzelachse möglich sind. Dies sind bspw. eine Geschwindigkeitssollwert-Nullschaltung mit evtl. vorgebbaren Randbedingungen sowie auch eine Positionierbewegung mit evtl. vorgebbaren Randbedingungen. Als eine weitere Option kann auch eine Verzögerungszeitspanne bzw. ein Leitwertweg vorgegeben werden bevor die eigentliche Fehlerreaktion eingeleitet wird. Hierdurch ist es z.B. möglich, eine mehrstufige Maschine synchronisiert leerzufahren, indem analog einem Schieberegister Produkte in den Maschinenstufen nach und nach nicht mehr bearbeitet werden. Im vorliegenden Beispiel wird nunmehr durch die Leitachse 1 ein Leitwert generiert. Im Fehlerfalle wie bspw. bei Ausfall der Führungskommunikation 2 wird nunmehr durch die Systeme C1 und C2 eine Fehlerreaktion anhand des generierte Leitwertes eingeleitet und durchgeführt. Durch die Fehlerreaktion anhand des Leitwertes sind dezentral verteilte synchrone Fehlerreaktionen möglich, die dazu führen, dass eine Maschine im Falle eines Fehlers genauso reagiert, als ob die Leitwertbewegung zentral vorgegeben wird. Ferner werden nach extern abgegebene Signale weiterhin und zum richtigen Zeitpunkt ausgegeben. Die sich den jeweiligen Ausgängen A1 bzw. A2 anschließenden Antriebsachsen verbleiben in ihrer vor Auftreten des Fehlers vorhandenen Betriebsart.

## Patentansprüche

1. Verfahren zur Fehlerreaktion bei Auftreten eines Fehlers bzw. einer Störung bei einer Bewegung, insbesondere eines Antriebs, in einer Maschine mit einer Übertragung einer Leitachsinformation, wobei die Bewegung unter Einsatz mindestens einer Leitachse (1) und mindestens einer mindestens einen Ein- (E1, E2) und einen Ausgang (A1, A2) aufweisenden und von der Leitachse (1) gesteuerten Kurvenscheibe (10, 20) erfolgt, bei dem bei Auftreten einer Störung in der Übertragung der Leitachsinformation an dem mindestens einen Eingang (E1, E2) der mindestens einen Kurvenscheibe (10, 20) vorliegende Prozessgrößen zur Einleitung und Durchführung der Fehlerreaktion verwendet werden.

2. Verfahren nach Anspruch 1, bei dem die Prozessgrößen durch einen von der Leitachse (1) vorgegebenen Leitwert bestimmt werden.

3. Verfahren nach Anspruch 2, bei dem als Prozessgrößen des Leitwertes Leitwertposition, Leitwertgeschwindigkeit, Leitwertbeschleunigung und/oder Leitwertruck verwendet werden.

4. Verfahren nach einem der vorhergehenden Ansprüche, bei dem als Fehlerreaktion eine Geschwindigkeitssollwert-Nullschaltung durchgeführt wird.

5. Verfahren nach einem der Ansprüche 1 bis 3, bei dem als Fehlerreaktion eine Positionierbewegung durchgeführt wird.

6. Verfahren nach einem der vorhergehenden Ansprüche, bei dem als Leitachse (1) eine zentrale Leitachse, die mit der mindestens einen Kurvenscheibe (10, 20) als Element eines dezentral arbeitenden Systems über ein Führungskommunikationssystem (2) gekoppelt ist, gewählt wird und die Fehlerreaktion dezentral durchgeführt wird.

7. Verfahren nach einem der vorhergehenden Ansprüche, bei dem vor und/oder beim Einleiten einer Fehlerreaktion eine Verzögerungszeitspanrie und/oder ein Leitwertweg vorgegeben wird.

8. Verfahren nach einem der vorhergehenden Ansprüche, bei dem nach Wegfall des Fehlers eine bereits eingeleitete Fehlerreaktion zurückgesetzt wird.

9. Verfahren nach einem der vorhergehenden Ansprüche, bei dem bei Auftreten des Fehler mittels der vorliegenden Prozessgrößen auf eine virtuelle die mindestens eine Kurvenscheibe (10, 20) steuernde Leitachse umgeschaltet wird.

10. Computersystem mit einem Speichermittel, in dem ein Computerprogramm mit Programmcode gespeichert ist, der bei Ablauf des Computerprogramms auf einem Computer dazu geeignet ist, ein Verfahren nach einem der Ansprüche 1 bis 9 durchzuführen.

11. Computerprogramm mit Programmcode, der bei Ablauf des Computerprogramms auf einem Computer dazu geeignet ist, ein Verfahren nach einem der Ansprüche 1 bis 9 durchzuführen.

12. Computerlesbarer Datenträger mit einem darauf gespeicherten Computerprogramm, das einen Programmcode umfaßt, der bei Ablauf des Computerprogramm auf einem Computer dazu geeignet ist, ein Verfahren nach einem der Ansprüche 1 bis 9 durchzuführen.

## Claims

1. Method for error reaction to the occurrence of an error or a fault during a movement, in particular of a drive, in a machine in which guide axis information is transmitted, wherein the movement takes place using at least one guide axis (1) and at least one cam disc (10, 20) which has at least one input (E1, E2) and one output (A1, A2) and is controlled by the guide axis (1) which, when a fault occurs in the transmission of the guide axis information, process variables which are present at the at least one input (E1, E2) of the at least one cam disc (10, 20) are used to initiate and carry out the error reaction.

2. Method according to Claim 1, in which the process variables are determined by a command value which is predetermined by the guide axis (1).

3. Method according to Claim 2, in which command value position, command value speed, command value acceleration and/or command value jerk are/is used as process variables of the command value.

4. Method according to one of the preceding claims, in which speed nominal value zero switching is carried out as an error reaction.

5. Method according to one of Claims 1 to 3, in which a positioning movement is carried out as an error reaction.

6. Method according to one of the preceding claims, in which a central guide axis, which is coupled to the at least one cam disc (10, 20) as an element of a locally operating system via a guidance communication system (2) is chosen as the guide axis (1), and the error reaction is carried out locally.

7. Method according to one of the preceding claims, in which a delay time interval and/or a command value movement are/is preset before and/or during introduction of an error reaction.

8. Method according to one of the preceding claims, in which an error reaction which has already been initiated is reset when there is no longer an error.

9. Method according to one of the preceding claims, in which, when the error occurs, the process variables that are present are used to switch to a virtual guide axis which controls the at least one cam disc (10, 20).

10. Computer system having a memory means in which a computer program with program code is stored, which is suitable to carry out a method according to one of Claims 1 to 9 when the computer program is run on a computer.

11. Computer program with program code which is suitable for carrying out a method according to one of Claims 1 to 9 when the computer program is run on a computer.

12. Computer-legible data storage medium having a computer program stored on it, which comprises a program code which is suitable for carrying out a method according to one of Claims 1 to 9 when the computer program is run on a computer.

## Revendications

1. Procédé de réaction à une erreur lorsque se produit une erreur ou une perturbation au cours d'un mouvement, notamment d'un moyen d'entraînement dans une machine avec transmission d'une information d'axe pilote,
selon lequel
le mouvement se fait en utilisant au moins un axe pilote (1) et au moins une came (10, 20) commandée par l'axe pilote (1), et ayant au moins une entrée (E1, E2) et une sortie (A1, A2), et selon lequel en cas de perturbation dans la transmission de l'information de l'axe pilote vers au moins une entrée (E1, E2) d'au moins une came (10, 20) on utilise les grandeurs de procédé disponibles pour démarrer et exécuter la réaction à l'erreur.

2. Procédé selon la revendication 1,
selon lequel
les grandeurs de procédé sont déterminées par une valeur pilote prédéinie par l'axe pilote (1).

3. Procédé selon la revendication 2,
selon lequel
les grandeurs de procédé de la valeur pilote sont la valeur pilote de position, la valeur pilote de vitesse, la valeur pilote d'accélération et/ou la valeur pilote de retour.

4. Procédé selon l'une quelconque des revendications précédentes,
selon lequel
comme réaction à l'erreur, on effectue un passage par zéro de la valeur de consigne de la vitesse.

5. Procédé selon l'une quelconque des revendications 1 à 3,
selon lequel
comme réaction à l'erreur, on effectue un mouvement de positionnement.

6. Procédé selon l'une quelconque des revendications précédentes,
selon lequel
comme axe pilote (1), on choisit un axe pilote central couplé à au moins une came (10, 20) comme élément d'un système fonctionnant de manière décentralisée, par l'intermédiaire d'un système de communication de guidage (2), et on effectue la réaction décentralisée à l'erreur.

7. Procédé selon l'une quelconque des revendications précédentes,
selon lequel
avant et/ou lors du lancement d'une réaction à l'erreur, on prédéfinit un intervalle de temporisation et/ou une valeur pilote de chemin.

8. Procédé selon l'une quelconque des revendications précédentes,
selon lequel
après élimination de l'erreur, on revient à une réaction à l'erreur déjà lancée.

9. Procédé selon l'une quelconque des revendications précédentes,
selon lequel
lorsque se produit l'erreur, avec les grandeurs de procédé disponibles, on commute sur un axe pilote virtuel commandant au moins une came (10, 20).

10. Système d'ordinateur comportant un moyens de mémoire dans lequel est enregistré un programme d'ordinateur avec un code-programme qui, lors de l'exécution du programme sur un ordinateur, permet d'effectuer un procédé selon l'une quelconque des revendications 1 à 9.

11. Programme d'ordinateur avec un code-programme qui lorsque le programme est exécuté sur un ordinateur, permet d'exécuter le procédé selon l'une quelconque des revendications 1 à 9.

12. Support de données lisibles par un ordinateur et sur lequel est enregistré un programme d'ordinateur comportant un code-programme qui lorsqu'il est exécuté sur un ordinateur, permet d'effecteur un procédé selon l'une des revendications 1 à 9.
